# EUROPEAN PATENT APPLICATION

(11) **EP 1 164 651 A1**
(43) Date of publication of application: **19.12.2001**
(21) Application number: 01112885.7
(22) Date of filing: 01.06.2001
(51) Int. Cl.: H01M 4/92, B01J 23/42

(54) **Electrode catalyst for polymer electrolyte fuel cell and method for its production**

(30) Priority: 12.06.2000 JP 2000175802; 28.06.2000 JP 2000195109
(71) Applicant: Asahi Glass Co., Ltd., Tokyo 100-8405 (JP)
(72) Inventor: Terazono, Shinji, Kanagawa-ku, Yokohama-shi, Kanagawa (JP); Yanagisawa, Eiji, Kanagawa-ku, Yokohama-shi, Kanagawa (JP); Yoshitake, Masaru, Kanagawa-ku, Yokohama-shi, Kanagawa (JP); Tanuma, Toshihiro, Kanagawa-ku, Yokohama-shi, Kanagawa (JP)
(74) Representative: Müller-Boré & Partner Patentanwälte

(57) **Abstract**

A polymer electrolyte fuel cell comprising an ion exchange membrane, and a cathode and an anode facing each other via the ion exchange membrane, wherein the cathode comprises an ion exchange resin and an electrode catalyst having platinum or a platinum alloy deposited on a carbon support which has an average lattice spacing of (002) d₀₀₂ calculated by the X-ray diffraction data, of from 0.340 to 0.362 nm, a microcrystallite size L_{c} of from 0.6 to 4 nm and a specific surface area of from 260 to 800 m²/g.

## Description

The present invention relates to a polymer electrolyte fuel cell, particularly a polymer electrolyte fuel cell whereby a high output voltage can be obtained constantly over a long period of time.

A fuel cell is an electric cell whereby a reaction energy of a gas as a feed material is converted directly to an electric energy, and a hydrogen/oxygen fuel cell presents no substantial effect to the global environment since its reaction product is only water in principle. Especially, a polymer electrolyte fuel cell employing a polymer as an electrolyte, can be operated at room temperature to provide a high power density and thus is expected to be a prospective power source for electric cars or stationary power source, along with an increasing social demand for an energy or global environmental problem in recent years.

In a polymer electrolyte fuel cell, a proton conductive ion exchange membrane is commonly employed as a polymer electrolyte, and an ion exchange membrane made of a perfluorocarbon polymer having sulfonic acid groups (hereinafter referred to as a sulfonic acid-type perfluorocarbon polymer) is particularly excellent in the basic properties. In the polymer electrolyte fuel cell, gas diffusion type electrode layers are disposed on both sides of the ion exchange membrane, and power generation is carried out by supplying hydrogen as a fuel and oxygen or air as an oxidizing agent to an anode and a cathode, respectively.

For the electrode layers of the polymer electrolyte fuel cell, it is common to use an electrode catalyst having platinum or a platinum alloy catalyst supported on e.g. a conductive carbon black having a large specific surface area. Further, the reaction at a gas diffusion type electrode layer proceeds only at a three phase interface where an electrolyte, a catalyst and a gas (hydrogen or oxygen) are present at the same time. Particularly, by a method of enlarging the three phase interface by covering the catalyst with an ion exchange resin, it is possible to improve the performance of the polymer electrolyte fuel cell.

At the cathode of a polymer electrolyte fuel cell, a reaction represented by O₂+4H⁺+4e⁻→2H₂O, will take place, and water will be formed by the reaction of oxygen as an oxidizing agent, protons passed through an ion exchange membrane and electrons flowing from an external circuit. In this oxygen reduction reaction, platinum is used as a catalyst, since it is stable and provides a high activity in a perfluorocarbon polymer having sulfonic acid groups. However, it has been difficult to obtain excellent output characteristics, since the overvoltage in the reduction reaction of oxygen at the cathode is very large as compared with the oxidation reaction of hydrogen at the anode. To improve the output characteristics, with a phosphoric acid type fuel cell (PAFC), it has been attempted to enlarge the metal surface area by microsizing the platinum particles, to improve the dispersibility of the platinum particles or to use a platinum alloy.

With a polymer electrolyte fuel cell employing a polymer electrolyte membrane as an electrolyte, its operation temperature is usually at most 100°C, and the reduction reaction rate of oxygen at the cathode is lower than the phosphoric acid type fuel cell. Accordingly, in an application where high output characteristics are required, such as an application for stationary use or an application as mounted on a vehicle, etc., it is necessary to develop an electrode catalyst presenting a higher activity to the reaction at the cathode.

Accordingly, it is an object of the present invention to provide a polymer electrolyte fuel cell whereby a high power is obtainable constantly over a long period of time, by paying a particular attention to the electrode catalyst of a cathode in order to reduce the overvoltage for the reduction reaction of oxygen at the cathode.

The present invention provides a polymer electrolyte fuel cell comprising an ion exchange membrane, and a cathode and an anode facing each other via the ion exchange membrane, wherein the cathode comprises an ion exchange resin and an electrode catalyst having platinum or a platinum alloy deposited on a carbon support which has an average lattice spacing of (002) d₀₀₂ calculated by the X-ray diffraction data, of from 0.340 to 0.362 nm, a microcrystallite size L_{c} calculated by the X-ray diffraction of from 0.6 to 4 nm and a specific surface area of from 260 to 800 m²/g.

Further, the present invention provides a method for producing a polymer electrolyte fuel cell comprising an ion exchange membrane, and a cathode and an anode facing each other via the ion exchange membrane, wherein the cathode comprises an ion exchange resin and an electrode catalyst, wherein the electrode catalyst is obtained by subjecting a carbon black or activated carbon having a specific surface area of at least 300 m²/g to heat treatment at a temperature of from 1,000 to 2,200°C and having platinum or a platinum alloy deposited on the obtained carbon material as a support.

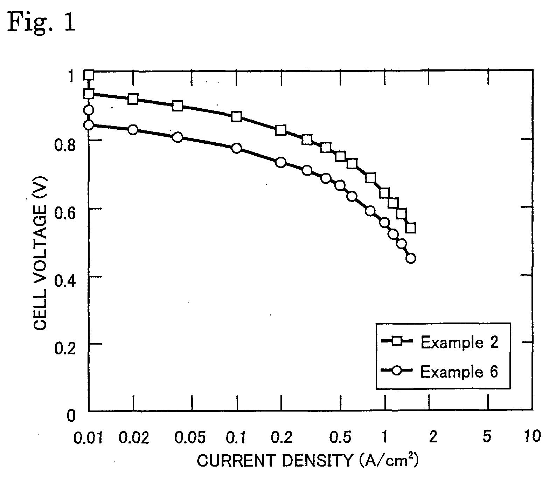

In the accompanying drawing, Fig. 1 is a graph showing the current density/cell voltage characteristics of polymer electrolyte fuel cells of Examples 2 and 6.

Now, the present invention will be described in detail with reference to the preferred embodiments.

The polymer electrolyte fuel cell of the present invention uses an electrode catalyst highly active to the reduction reaction of oxygen at the cathode, and thus, it has high output characteristics and is capable of maintaining a constant output power over a long period of time. The reason for the high activity of the above electrode catalyst is not clearly understood, but is considered to be such that as a carbon support, a carbon material having a high electron density with highly graphitized carbon, is employed, whereby the electron state of platinum or a platinum alloy (hereinafter referred to as a metal catalyst) deposited on this support is changed to accelerate the reduction reaction of oxygen.

Further, as the graphitization of the carbon support is advanced, water repellency is high, whereby water, etc. as a reaction product formed at the cathode, can readily be discharged. Consequently, a phenomenon of condensation of the formed water which fills pores of the cathode tends to scarcely occur, whereby the constant power is believed to be maintained over a long period of time.

In the present invention, the average lattice spacing of (002) d₀₀₂ of the carbon support is a spacing between hexagonal net planes based on the graphite structure of the carbon support and represents an average value of a 1/2 interlayer distance of the lattice constant C in the C-axis direction which is a perpendicular direction to the hexagonal net planes. Further, the crystallite size L_{c} is the thickness of the lamination of the hexagonal net planes in the C-axis direction. Each of them is a value calculated by the X-ray diffraction pattern.

The average lattice spacing d₀₀₂ and the crystallite size L_{c} are indices of the degree of graphitization of the carbon material. With a complete graphite crystal, d₀₀₂ is 0.3345 nm, and the closer the d₀₀₂ of a carbon material to this value, the higher the degree of graphitization. In the present invention, the carbon support has d₀₀₂ of from 0.340 to 0.362 nm. If d₀₀₂ is less than 0.340 nm, the degree of graphitization of the carbon support is too high, and the specific surface area decreases, whereby the dispersibility of the metal catalyst to be supported tends to decrease, or the surface area of the metal catalyst tends to decrease, and consequently, the electrode activity tends to decrease. Here, the surface area of platinum or a platinum alloy as a metal catalyst can be obtained as CO-MSA (metal surface area) based on a CO adsorption method which is calculated from the amount of adsorption of CO gas on the metal surface, or as EC (electro chemical)-MSA which is measured by an electrochemical method.

On the other hand, if d₀₀₂ of the carbon support exceeds 0.362 nm, the degree of graphitization is so low that the cathode activity will not be improved, or no adequate water repellency or no adequate corrosion resistance to the ion exchange resin as a strong acid, tends to be obtainable. Consequently, the power will decrease if such a fuel cell is used for a long period of time. Particularly preferably, d₀₀₂ is from 0.345 to 0.353 nm.

Further, in the present invention, the carbon support has L_{c} of from 0.6 to 4 nm. If it is less than 0.6 nm, the degree of graphitization is so low that no adequate catalyst activity can be obtained, and if it exceeds 4 nm, the degree of graphitization is so high that the specific surface area decreases, and the dispersibility of the metal catalyst to be supported decreases. Particularly preferably, L_{c} is from 1 to 2 nm.

Further, in the present invention, the specific surface area of the carbon support is from 260 to 800 m²/g, preferably from 300 to 500 m²/g. In this range, the metal catalyst will be deposited on the carbon support with good dispersibility, and even under such a condition as covered with a strongly acidic polymer such as a sulfonic acid type perfluorocarbon polymer, the grain growth of the metal catalyst component will be suppressed, whereby it is possible to obtain an electrode catalyst excellent in the activity for the electrode reaction, which is constant over a long period of time.

In the method of the present invention, the carbon support is obtained by subjecting a carbon black having a specific surface area of at least 300 m²/g or an activated carbon having a specific surface area of at least 300 m²/g to heat treatment at a temperature of from 1,000 to 2,200°C, particularly preferably to heat treatment at a temperature of from 1,200 to 1,800°C. Usually, activated carbon or carbon black such as furnace black, has d₀₀₂ of from 0.355 to 0.385 nm, L_{c} of from 0.1 to 0.3 nm and a specific surface area of from 100 to 2,500 m²/g, but by the heat treatment, the degree of graphitization of the activated carbon or carbon black will increase.

Among carbon blacks, there is a carbon material having a high degree of graphitization so-called acetylene black to be produced by using acetylene as the starting material, but acetylene black has a specific surface area which is usually as small as from 30 to 200 m²/g. In the present invention, in order to obtain high output characteristics constantly for a long period of time with a fuel cell, the carbon support is required to have not only a high degree of graphitization but also a high specific surface area to support the metal catalyst with good dispersibility. With acetylene black, the specific surface area is so small that the metal catalyst can not be supported with good dispersibility.

An electrode catalyst wherein the activated carbon or carbon black having the degree of graphitization increased by the heat treatment, is used as a support for supporting a metal catalyst component comprising platinum as the main element, will show a high oxygen-reduction activity. Further, as the degree of graphitization of carbon increases, the surface functional groups present along the edge of the hexagonal net planes relatively decrease, and consequently, the carbon support will secure water repellency.

As such surface functional groups, acidic functional groups such as carboxyl groups or phenolic hydroxyl groups, or neutral functional groups such as carbonyl groups, may be present. With a polymer electrolyte fuel cell, it is expected to let a large current flow in order to secure an output power, and under such a condition, a large amount of water will form by the reduction reaction of oxygen at the cathode. Accordingly, water repellency of the cathode is particularly important. For this reason, it is advantageous that the water repellency can be secured as the graphitization of the carbon support to be used, is increased, whereby discharge of the formed water can be carried out efficiently, and constant output characteristics can be obtained over a long period of time.

In the method of the present invention, if the temperature for the heat treatment of the carbon material to be a carbon support, is lower than 1,000°C, graphitization will not proceed, and a high oxygen-reduction activity can not be obtained. On the other hand, if it exceeds 2,200°C, the degree of graphitization of the carbon support tends to be too high, or the specific surface area tends to decrease too much, whereby the dispersibility of the metal catalyst component may sometimes tend to be low.

As the carbon black or activated carbon to be used as the starting material in the method of the present invention, carbon black such as channel black, furnace black or thermal black, or activated carbon obtained by carbonizing various materials containing carbon atoms, followed by activation treatment, may be used. The carbon black is one produced by thermal decomposition of a liquid or gas of a hydrocarbon. Whereas, the activated carbon is one produced by using a powder of wood material, coconut husk or pulp spent liquor of a plant type and coal, petroleum coke or petroleum pitch of a mineral type, as starting materials, and carbonizing them, followed by steam activation or chemical activation.

As the carbon black or activated carbon to be used as the starting material, one having a specific surface area of at least 300 m²/g is used. If the specific surface area is less than 300 m²/g, the specific surface area of the carbon support obtained by heat treatment, will be further smaller, whereby a metal catalyst can not be supported with good dispersibility. It is preferably at least 500 m²/g. On the other hand, if the specific surface area is too large, graphitization will not sufficiently proceed even if such a carbon black or activated carbon is subjected to heat treatment, whereby the activity of the electrode catalyst may not be increased sufficiently, or the water repellency may not be increased sufficiently. Accordingly, the specific surface area of the carbon black or activated carbon to be used as the starting material is preferably at most 2,500 m²/g.

In the present invention, platinum or a platinum alloy is supported as a metal catalyst on a carbon support. The platinum is highly active for the oxidation reaction of hydrogen at the anode and the reduction reaction of oxygen at the cathode in the polymer electrolyte fuel cell. When the platinum alloy is used, the stability and activity as the electrode catalyst can further be imparted. The platinum alloy is preferably an alloy of platinum with at least one metal selected from the group consisting of metals of platinum group other than platinum (such as ruthenium, rhodium, palladium, osmium and iridium), gold, silver, chromium, iron, titanium, manganese, cobalt, nickel, molybdenum, tungsten, aluminum, silicon, zinc and tin, and such a platinum alloy may contain an intermetallic compound of platinum with a metal to be alloyed with platinum.

In the present invention, the method for producing the electrode catalyst may, for example, be the following method. The carbon support is dispersed in a solution having a platinum salt (such as chloroplatinic acid) dissolved in water or in a water/alcohol mixed solvent. When a platinum alloy is to be used as the electrode catalyst, a compound of a metal to be alloyed with platinum is further dissolved or dispersed in such a solution. Here, as the compound of a metal to be alloyed with platinum, it is preferred to employ, for example, a halide such as a chloride or bromide, an alkoxide such as methoxide or ethoxide, an oxide, a nitrate or a sulfide.

Then, this liquid is heated and stirred to precipitate the above platinum salt or its reaction product (in the case of a platinum alloy, a platinum salt or its reaction product plus the compound of a metal to be alloyed with platinum or its reaction product) on the carbon support. If necessary, the pH in the solution is adjusted to be alkaline, so that platinum and an optionally added metal, may be precipitated in the form of a hydroxide on the carbon support. Further, filtration, washing and drying will suitably be carried out. Then, reduction treatment is applied by means of e.g. hydrogen gas, and then heat treatment is carried out in an atmosphere of an inert gas such as helium, argon or nitrogen, to obtain the electrode catalyst.

When a platinum alloy is used as the electrode catalyst, its composition is preferably from 30 to 90 atomic % of platinum and from 10 to 70 atomic % of the metal to be alloyed, although the composition may depend upon the type of the metal to be alloyed. Further, with respect to the conditions for the above heat treatment for alloying, the heat treatment is carried out preferably at a temperature of from 200 to 900°C in an atmosphere of an inert gas such as argon or nitrogen or in a reducing atmosphere containing hydrogen, although it depends also on the particle size and the dispersed state of the compound of a metal precipitated on the carbon support.

In the present invention, the particle size of the metal catalyst constituting the electrode catalyst, is preferably from 1 to 20 nm in order to obtain a highly active cathode, and particularly preferably, it is from 2 to 5 nm, whereby the surface area of the metal catalyst at the active site can be given sufficiently.

Further, with a polymer electrolyte fuel cell, the electrodes are required to be excellent in a gas diffusion property even when it is operated at a high current density, and the thickness of the cathode is preferably thin. At the same time, the cathode is required to contain an adequate amount of the metal catalyst. It is usually preferred that the metal catalyst is supported in an amount of from 10 to 65 mass%, particularly from 30 to 60 mass%, in the total mass of the electrode catalyst.

However, when it is desired to operate the cell at a high current density of at least 0.5 A/cm² to obtain a high output power, it is preferred that the metal catalyst is supported in an amount of from 52 to 80 mass%, more preferably from 55 to 75 mass%, still further preferably from 58 to 70 mass%, in the total mass of the electrode catalyst, and the electrode catalyst in the cathode is from 55 to 75 mass%, more preferably from 60 to 70 mass%, based on the total amount of the electrode catalyst and the ion exchange resin contained in the cathode (hereinafter referred to as an electrode resin). If the amount of the metal catalyst in the electrode catalyst is made to be a high proportion at a level of from 52 to 80 mass%, the metal catalyst particles can be present at a higher concentration at the reaction site (at the interface of three phases of the catalyst, the ion exchange resin and the fuel gas), whereby a high output power can be obtained.

As a catalyst, it is possible to employ particles of a metal catalyst such as platinum, not deposited on a support, per se as the catalyst. However, in a case where a strongly acidic ion exchange resin such as a sulfonic acid type perfluorocarbon polymer, is used as the electrode resin, the catalyst will be covered with an electrode resin, and in such a case, with a metal catalyst not deposited on a support, the flow of electrons will be impaired, whereby the resistance of the electrodes will increase, and a high output power tends to be hardly obtainable. On the other hand, if the metal catalyst is deposited on carbon, the electron conductivity can be given by the contact of carbon to carbon. Further, in a case where metal catalyst particles not deposited on a carbon support, are used, no adequate volume of pores having pore diameters of at least 0.1 µm, which is suitable for discharge of water formed at the cathode, can be obtained, whereby water can hardly be discharged.

For these reasons, in the present invention, a supported catalyst is used, and in order to obtain a high output power, the higher the supported ratio, the better. However, if it is too high, it tends to be difficult to have metal catalyst particles deposited on the carbon support with good dispersibility, and in a case where a strongly acidic electrode resin is used, growth of metal catalyst particles is likely to be induced.

Further, if the supported catalyst in the cathode is less than 50 mass% based on the total amount of the electrode resin and the supported catalyst, the reaction sites of the cathode in the vicinity of the polymer electrolyte membrane can not adequately be given. Accordingly, particularly when it is desired to obtain a particularly high output power, it is preferably at least 50 mass%. Protons which reach a cathode after passing through an electrolyte membrane from an anode, act advantageously to the reaction at the cathode in a region close to the electrolyte membrane, since the transfer resistance is small in such a region. Accordingly, it is important to secure reaction sites of the cathode adequately in the vicinity of the electrolyte membrane.

Particularly, it is preferred to secure adequate reaction sites in a region within 10 µm in the thickness direction of the cathode from the electrolyte membrane surface. Namely, it is preferred that the cathode and the electrolyte membrane are in contact with each other, and it is preferred to adjust so that the above supported catalyst is contained in an amount of from 50 to 80 mass%, based on the total amount of the electrode resin and the supported catalyst, in the region within 10 µm in the thickness direction of the cathode from the electrolyte membrane surface. Such an adjustment serves particularly advantageously for protons passing through the electrolyte membrane, so that protons effectively react with oxygen supplied to the cathode and electrons from the current collector, whereby high output characteristics can be obtained.

The carbon support to be used in the present invention has the degree of graphitization increased, but it is adjusted so that the specific surface area will not be small, whereby it is possible to support metal catalyst particles at a high supported ratio and with good dispersibility.

In the cathode in the present invention, the electrode catalyst and the electrode resin are contained as described above, and as the electrode resin is contained, the cathode is further activated. The electrode catalyst is preferably covered with the electrode resin, and by being covered, the interface of the three phases can be enlarged.

The ion exchange resins contained in the above cathode and in the ion exchange resin constituting the ion exchange membrane as an electrolyte, may be the same or different, but each of them is preferably made of a perfluorocarbon polymer having sulfonic acid groups. Particularly preferred is an ion exchange resin made of a copolymer comprising polymerized units based on CF₂=CF₂ and polymerized units based on CF₂=CF-(OCF₂CFX)ₘ-Oₚ-(CF₂)ₙ-SO₃H (wherein X is a fluorine atom or a trifluoromethyl group, m is an integer of from 0 to 3, n is an integer of from 1 to 12, and p is 0 or 1). In this specification, the perfluorocarbon polymer includes not only a polymer made solely of carbon atoms and fluorine atoms but also one containing oxygen atoms, etc., so long as hydrogen atoms are all substituted by fluorine atoms.

Further, in a case where the fuel cell is operated at a particularly high current density, the ion exchange capacity of the electrode resin is preferably from 1.0 to 1.5 meq/g dry resin, particularly from 1.1 to 1.4 meq/g dry resin. If it is less than 1.0 meq/g dry resin, the resistance of the electrode tends to be high as the water content of the electrode resin is low, whereby it tends to be difficult to increase the output power of the cell. On the ether hand, if it exceeds 1.5 meq/g dry resin, the electrode resin tends to be readily dissolved in water, whereby the electrode resin is likely to elute during the operation of the fuel cell, and the cell voltage is likely to be low.

The anode in the present invention preferably contains an electrode catalyst and an ion exchange resin. The electrode catalyst and the ion exchange resin may be the same or different as the electrode catalyst and the ion exchange resin constituting the cathode. The ion exchange resin is preferably a perfluorocarbon polymer having sulfonic acid groups, like the cathode. Further, the fuel gas to be supplied to the anode is usually supposed to be e.g. a methane-modified gas, a methanol-modified gas or a gasoline-modified gas, and such a modified gas contains from a few tens ppm to a few hundreds ppm of CO. In the case of an electrode catalyst using platinum as the metal catalyst, the resistance to the CO poisoning is weak, and a constant output power can hardly be obtainable. Accordingly, in a case where a fuel gas containing such CO is used, it is preferred to employ for an anode a platinum/ruthenium catalyst which is excellent in the CO poisoning resistance.

In the polymer electrolyte fuel cell of the present invention, a cathode and an anode are disposed on both sides of an ion exchange membrane (hereinafter the cathode and the anode may generally be referred to as gas diffusion electrodes), and it is preferred that the ion exchange membrane and the gas diffusion electrodes are bonded to each other. The bonded assembly of the gas diffusion electrodes and the ion exchange membrane (hereinafter referred to as the electrode/membrane bonded assembly) may be produced by various methods such as a method wherein the gas diffusion electrodes are directly formed on the ion exchange membrane, a method wherein gas diffusion electrodes are formed on substrates such as carbon paper or carbon cloth, and they are bonded to the ion exchange membrane, or a method wherein the gas diffusion electrodes are formed on flat plates, and then they are transferred to the ion exchange membrane.

As a method for forming the gas diffusion electrodes, preferred is a known method wherein a coating fluid containing the electrode catalyst, the ion exchange resin and, if necessary, a water repellent, a pore-forming agent, a thickener, a diluting solvent, etc., is applied by spraying, coating, filtrating or the like on an ion exchange membrane or a conductive porous member such as a carbon paper. Here, the conductive porous member such as a carbon paper is usually disposed between a layer containing the electrode catalyst and the ion exchange resin (hereinafter referred to as the catalyst layer) and a separator having a flow path formed to supply a gas, and has a function as a current collector and a function as a gas diffusion layer to supply the gas uniformly to the catalyst layer. In a case where the catalyst layer is formed on a conductive porous member such as a carbon paper separate from the ion exchange membrane, to form a gas diffusion electrode, it is preferred that such gas diffusion electrodes and the ion exchange membrane are bonded by e.g. a hot pressing method or a bonding method (see JP-A-7-220741).

Now, specific embodiments of the present invention will be described with reference Examples and Comparative Examples. However, it should be understood that the present invention is by no means restricted to such specific Examples.

### EXAMPLE 1 (the present invention)

Carbon black (specific surface area: 750 m²/g, d₀₀₂: 0.371 nm, L_{c}: 0.5 nm) was subjected to heat treatment at a temperature of 1,200°C for 5 hours in an argon atmosphere using a high frequency induction furnace. The obtained carbon material was analyzed by a powder X-ray diffraction method, whereby the distance of the average lattice spacing of (002) d₀₀₂ was 0.356 nm, and the microcrystallite size L_{c} was 1.0 nm. Further, the specific surface area was measured by a nitrogen adsorption method (BET method), whereby it was 700 m²/g.

Then, the above carbon material was dispersed in deionized water, and an aqueous solution containing 5 mass% of hydrogen hexachloroplatinate (H₂PtCl₆) and a 35% formaldehyde aqueous solution were added, and the mixture was cooled to -10°C and stirred. A 40 mass% sodium hydroxide aqueous solution was dropwise added thereto, and the mixture was refluxed for 1 hour, followed by filtration and washing to prepare an electrode catalyst having platinum deposited on the above carbon material (the carbon support) (platinum:carbon support=53:47 (mass ratio)). This electrode catalyst was measured by a powder X-ray diffraction method, whereby the particle size of platinum was about 2.0 nm.

### EXAMPLE 2 (the present invention)

Heat treatment was carried out in the same manner as in Example 1 except that the conditions for the heat treatment of the carbon black were changed to 1,400°C for 3 hours. The obtained carbon material was evaluated in the same manner as in Example 1, whereby the distance of the average lattice spacing of (002) d₀₀₂ was 0.351 nm, the microcrystallite size L_{c} was 1.3 nm, and the specific surface area was 400 m²/g. An electrode catalyst was prepared in the same manner as in Example 1 except that this carbon material was used as the support. This electrode catalyst was measured by a powder X-ray diffraction method, whereby the particle size of platinum was about 2.0 nm.

### EXAMPLE 3(Comparative Example)

Heat treatment was carried out in the same manner as in Example 1 except that the conditions for heat treatment of carbon black were changed to 1,900°C for 5 hours. The obtained carbon material was evaluated in the same manner as in Example 1, whereby the distance of the average lattice spacing of (002) d₀₀₂ was 0.341 nm, the microcrystallite size L_{c} was 3.5 nm, and the specific surface area was 210 m²/g. An electrode catalyst was prepared in the same manner as in Example 1 except that this carbon material was used as the support. This electrode catalyst was measured by a powder X-ray diffraction method, whereby the particle size of platinum was about 2.1 nm.

### EXAMPLE 4 (the present invention)

Heat treatment was carried out in the same manner as in Example 1 except that the conditions for heat treatment of carbon black were changed to 1,100°C for 5 hours, and a resistance heating furnace was employed. The obtained carbon material was evaluated in the same manner as in Example 1, whereby the distance of the average lattice spacing of (002) d₀₀₂ was 0.361 nm, the microcrystallite size L_{c} was 0.8 nm, and the specific surface area was 720 m²/g. An electrode catalyst was prepared in the same manner as in Example 1 except that this carbon material was used as the support. This electrode catalyst was measured by a powder X-ray diffraction method, whereby the particle size of platinum was about 1.9 nm.

### EXAMPLE 5 (Comparative Example)

An electrode catalyst was prepared in the same manner as in Example 1 except that the carbon black employed in Example 1 was used as the support, as it was i.e. without heat treatment. This electrode catalyst was measured by a powder X-ray diffraction method, whereby the particle size of platinum was about 2.0 nm.

### EXAMPLE 6 (Comparative Example)

Carbon black (specific surface area: 250 m²/g, d₀₀₂: 0.357 nm, L_{c}: 1.5 nm) was subjected to heat treatment at 2,000°C for 5 hours in an argon gas atmosphere using a high frequency induction furnace. The obtained carbon material was evaluated in the same manner as in Example 1, whereby the distance of the average lattice spacing of (002) d₀₀₂ was 0.344 nm, and the microcrystallite size L_{c} was 6.0 nm, and the specific surface area was 100 m²/g. An electrode catalyst was prepared in the same manner as in Example 1 except that this carbon material was used as the support. This electrode catalyst was measured by a powder X-ray diffraction method, whereby the particle size of platinum was about 2.2 nm.

### EXAMPLE 7 (Comparative Example)]

Carbon black (specific surface area: 750 m²/g, d₀₀₂: 0.371 nm, L_{c}: 0.5 nm) was subjected to heat treatment at 800°C. The obtained carbon material was evaluated in the same manner as in Example 1, whereby the distance of the average lattice spacing of (002) d₀₀₂ was 0.369 nm, the microcrystallite size L_{c} was 0.45 nm, and the specific surface area was 740 m²/g. An electrode catalyst was prepared in the same manner as in Example 1 except that this carbon material was used as the support. This electrode catalyst was measured by a powder X-ray diffraction method, whereby the particle size of platinum was about 2.0 nm.

### EXAMPLE 8 (Comparative Example)

Carbon black (specific surface area: 750 m²/g, d₀₀₂: 0.371 nm, L_{c}: 0.5 nm) was subjected to heat treatment at 2,300°C. The obtained carbon material was evaluated in the same manner as in Example 1, whereby the distance of the average lattice spacing of (002) d₀₀₂ was 0.339 nm, the microcrystallite size L_{c} was 1.5 nm, and the specific surface area was 210 m²/g. An electrode catalyst was prepared in the same manner as in Example 1 except that this carbon material was used as the support. This electrode catalyst was measured by a powder X-ray diffraction method, whereby the particle size of platinum was about 2.3 nm.

### EXAMPLE 9 (Comparative Example)

Carbon black (specific surface area: 250 m²/g, d₀₀₂: 0.357 nm, L_{c}: 1.5 nm) was subjected to heat treatment at 1,500°C in an argon gas atmosphere using a high frequency induction furnace. The obtained carbon material was evaluated in the same manner as in Example 1, whereby the distance of the average lattice spacing of (002) d₀₀₂ was 0.345 nm, the microcrystallite size L_{c} was 3.5 nm, and the specific surface area was 110 m²/g. An electrode catalyst was prepared in the same manner as in Example 1 except that this carbon material was used as the support. This electrode catalyst was measured by a powder X-ray diffraction method, whereby the particle size of platinum was about 2.8 nm.

### EXAMPLE 10 (the present invention)

The carbon black after the heat treatment in Example 1, was dispersed in deionized water, and an aqueous hydrogen hexachloroplatinate solution and a 35% formaldehyde aqueous solution were added, and the mixture was cooled to -10°C and stirred. A 40 mass% sodium hydroxide aqueous solution was dropwise added thereto, and the mixture was refluxed for 1 hour, followed by filtration and washing to obtain a catalyst having platinum deposited on carbon. Then, this catalyst was dispersed in deionized water, and with stirring, the pH was adjusted to 8 with dilute NH₄OH. Chromium nitrate was added thereto, and the mixture was stirred for about 2 hours, followed by filtration and drying at 140°C under reduced pressure. Then, heat treatment was carried out at 700°C for 3 hours in an argon gas atmosphere containing 3% of hydrogen, to prepare an electrode catalyst having a platinum/chromium alloy (platinum:chromium=7:3 (atomic ratio)) deposited in an amount of 45% in the total mass of the electrode catalyst. This electrode catalyst was measured by a powder X-ray diffraction method, whereby the particle size of the platinum/chromium alloy was about 3.5 nm.

### Evaluation

Each of the electrode catalysts prepared in Examples 1 to 10, was mixed and dispersed in an ethanol solution containing 6% of a copolymer (ion exchange capacity: 1.1 meq/g dry resin) comprising polymerized units based on tetrafluoroethylene and polymerized units based on CF₂=CF-OCF₂CF(CF₃)CF₂CF₂SO₃H, and then deionized water was added, followed by stirring to obtain a coating fluid for forming a catalyst layer. Then, this coating fluid was coated and dried on a carbon cloth to prepare a gas diffusion electrode having a metal catalyst content of 0.5 mg/cm². Here, each catalyst was adjusted to be contained in an amount of 70 mass% based on the total amount of the ion exchange resin and the catalyst.

An ion exchange membrane (tradename: Flemion, manufactured by Asahi Glass Company, Limited) made of a perfluorocarbon polymer having sulfonic acid groups and having a thickness of 50 µm as a polymer electrolyte membrane, was sandwiched between two sheets of the above-mentioned gas diffusion electrode, followed by hot pressing to obtain a membrane/electrode assembly.

The obtained membrane/electrode assembly was assembled into a measuring cell, and evaluation of initial performance of the polymer electrolyte fuel cell was carried out under an operational pressure of 0.15 MPa (absolute pressure) in a hydrogen (utilization ratio: 70%)/air (utilization ratio: 40%) system at a cell temperature of 80°C. In Table 1, the cell voltage at a current density of 0.3 A/cm², is shown.

Further, the cell voltage when it was operated continuously for 500 hours or 2,000 hours at a constant current driving at a current density of 0.3 A/cm² under an operational pressure of 0.15 MPa, in a hydrogen (utilization ratio: 70%)/air (utilization ratio: 40%) system at a cell temperature of 80°C, was measured, and the stability test of the cell output characteristics for a long period of time, was carried out. The results are shown in Table 1. For the purpose of comparison of the output characteristics of the fuel cells of the present invention with Comparative Examples, the initial current density/voltage characteristics in Examples 2 and 6 are shown in Fig. 1.

**Table 1**

| | Specific surface area (m²/g) | d₀₀₂ (nm) | L_{c} (nm) | Cell voltage (V) | | |
|---|---|---|---|---|---|---|
| | | | | Initial | After 500 hours | After 2,000 hours |
| Ex. 1 | 700 | 0.356 | 1.0 | 0.79 | 0.79 | 0.78 |
| Ex. 2 | 400 | 0.351 | 1.3 | 0.80 | 0.80 | 0.79 |
| Ex. 3 | 210 | 0.341 | 3.5 | 0.73 | 0.70 | 0.65 |
| Ex. 4 | 720 | 0.361 | 0.8 | 0.78 | 0.77 | 0.76 |
| Ex. 5 | 750 | 0.371 | 0.5 | 0.74 | 0.72 | 0.68 |
| Ex. 6 | 100 | 0.344 | 6.0 | 0.70 | 0.66 | 0.61 |
| Ex. 7 | 740 | 0.369 | 0.45 | 0.71 | 0.66 | 0.59 |
| Ex. 8 | 210 | 0.339 | 1.5 | 0.71 | 0.65 | 0.58 |
| Ex. 9 | 110 | 0.345 | 3.5 | 0.70 | 0.64 | 0.58 |
| Ex. 10 | 700 | 0.356 | 1.0 | 0.81 | 0.81 | 0.80 |

### EXAMPLE 11 (the present invention)

Carbon black having a specific surface area of 800 m²/g was subjected to graphitization treatment by carrying out heat treatment at 1,200°C for 3 hours in an argon atmosphere. The specific surface area of this carbon black by a nitrogen adsorption method (BET method) was 650 m²/g, and d₀₀₂ was 0.355 nm. This carbon black was dispersed in deionized water, and 27 g of an aqueous hydrogen hexachloroplatinate solution and 50 g of a 35% formaldehyde aqueous solution were added thereto, and the mixture was cooled to -10°C and stirred. Then, 20 g of a 40 mass% sodium hydroxide aqueous solution was dropwise added thereto, and the mixture was refluxed for 1 hour, followed by filtration and washing to obtain a platinum-supported catalyst having platinum deposited on the carbon support in an amount of 52.5% based on the total mass of the supported catalyst (hereinafter, the ratio of the mass of platinum to the total mass of the supported catalyst will be referred to as the supported ratio). According to the powder X-ray diffraction of the obtained platinum-supported catalyst, the platinum particle size was about 1.8 nm.

3.5 g of the above platinum-supported catalyst and 1.5 g of a copolymer (ion exchange capacity: 1.1 meq/g dry resin) comprising polymerized units based on CF₂=CF₂ and polymerized units based on CF₂=CF-OCF₂CF(CF₃)O(CF₂)₂-SO₃H, as the electrode resin, were mixed to an ethanol/water mixed solvent, and this mixture was used as a coating fluid for forming a catalyst layer. A gas diffusion electrode was obtained in the same manner as in Example 1 except that this coating fluid was employed. Using the same electrolyte membrane as used in Example 1, the above gas diffusion electrode as a cathode and a gas diffusion electrode (tradename: ELAT), manufactured by E-TEK Co. as an anode, an electrolyte membrane was sandwiched between the cathode and the anode, followed by hot pressing to prepare a membrane/electrode assembly.

The obtained membrane/electrode assembly was assembled into a measuring cell, and the initial voltage when it was operated at a constant current density of 1 A/cm² under 0.15 MPa (absolute pressure) at a cell temperature of 80°C using hydrogen as a fuel gas and air as an oxidizing agent gas, was measured, and then a continuous operation test was carried out at 1 A/cm², whereby the cell voltages upon expiration of 200 hours and 1,000 hours, were measured. In Table 2, the specific surface area of the (carbon) support, the supported ratio of platinum, the content of the catalyst (the mass ratio of the catalyst to the total amount of the catalyst and the electrode resin), and the results of the above measurements, are shown.

Further, the cross section of the above membrane/electrode assembly was observed by a scanning electron microscope (SEM), whereby the cathode was found to be bonded firmly with the membrane, and the thickness of the cathode was 10 µm. Further, the element analysis was carried out by an energy dispersive type fluorescent X-ray analyzer (EDX), whereby it was confirmed that the platinum-supported ratio of the supported catalyst at the cathode was 60%. Further, from the results of the above platinum analysis and the results of the sulfur analysis by EDX, the content of the supported catalyst was confirmed to be 70 mass% based on the total amount of the electrode resin and the supported catalyst.

### EXAMPLE 12 (the present invention)

A platinum-supported catalyst was prepared in the same manner as in Example 11 except that carbon black having a specific surface area of 400 m²/g, d₀₀₂ of 0.358 nm and L_{c} of 1.5 nm was used as the carbon support, and the supported ratio of platinum was changed to 55%. A cathode was prepared in the same manner as in Example 11 except that this platinum-supported catalyst and the same sulfonic acid type perfluorocarbon polymer as used in Example 11 were used, and the mixing ratio was changed so that the mass ratio of the above catalyst to the above polymer would be 60:40. A membrane/electrode assembly was prepared in the same manner as in Example 11, and evaluation was carried out in the same manner as in Example 11. The results are shown in Table 2.

### EXAMPLE 13 (the present invention)

A platinum-supported catalyst was prepared in the same manner as in Example 11 except that the supported ratio of platinum was changed to 75%. A cathode was prepared in the same manner as in Example 11 except that this platinum-supported catalyst and the same sulfonic acid type perfluorocarbon polymer as used in Example 11, were used, and the mixing ratio was changed so that the mass ratio of the above catalyst to the above polymer would be 75:25. A membrane/electrode assembly was prepared in the same manner as in Example 11 and evaluated in the same manner as in Example 11. The results are shown in Table 2.

### EXAMPLE 14 (the present invention)

A cathode was prepared in the same manner as in Example 11 except that the same platinum-supported catalyst and the sulfonic acid type perfluorocarbon polymer as used in Example 11, were used, and the mixing ratio was changed so that the mass ratio of the above catalyst to the above polymer would be 75:25. A membrane/electrode assembly was prepared in the same manner as in Example 11 and evaluated in the same manner as in Example 11. The results are shown in Table 2.

### EXAMPLE 15 (Comparative Example)

A cathode was prepared in the same manner as in Example 11 except that the same platinum-supported catalyst and the sulfonic acid type perfluorocarbon polymer as used in Example 11 were used, and the mixing ratio was changed so that the mass ratio of the above catalyst to the above polymer would be 35:65. A membrane/electrode assembly was prepared in the same manner as in Example 11 and evaluated in the same manner as in Example 11. The results are shown in Table 2.

### EXAMPLE 16 (Comparative Example)

A cathode was prepared in the same manner as in Example 11 except that the same platinum-supported catalyst and the sulfonic acid type perfluorocarbon polymer as used in Example 11 were used, and the mixing ratio was changed so that the mass ratio of the above catalyst to the above polymer would be 85:15. A membrane/electrode assembly was prepared in the same manner as in Example 11 and evaluated in the same manner as in Example 11. The results are shown in Table 2.

### EXAMPLE 17 (Comparative Example)

A platinum-supported catalyst was obtained in the same manner as in Example 11 except that the supported ratio of platinum was changed to 30%. According to the powder X-ray diffraction of this platinum-supported catalyst, the particle size of platinum was about 2.1 nm. A cathode was prepared in the same manner as in Example 11 except that this supported catalyst was used, and a membrane/electrode assembly was prepared in the same manner as in Example 11 and evaluated in the same manner as in Example 11. The results are shown in Table 2.

Further, the cross section of the above membrane/electrode assembly was observed by SEM, whereby the thickness of the cathode was 25 µm. Further, an elemental analysis was carried out by EDX, whereby it was confirmed that the platinum-supported ratio in the supported catalyst of the cathode was 30%. Further, the content of the supported catalyst was confirmed to be 70 mass% based on the total amount of the electrode resin and the supported catalyst, from the result of the above platinum analysis and the result of the sulfur analysis by EDX.

### EXAMPLE 18 (Comparative Example)

A platinum-supported catalyst was obtained in the same manner as in Example 1 except that carbon black having a specific surface area of 250 m²/g and d₀₀₂ of 0.357 nm, was used as the carbon support. According to the powder X-ray diffraction of this platinum-supported catalyst, the particle size of platinum was about 5.5 nm. A cathode was prepared in the same manner as in Example 11 except that this supported catalyst was employed, and a membrane/electrode assembly was prepared in the same manner as in Example 11 and evaluated in the same manner as in Example 11. The results are shown in Table 2.

### EXAMPLE 19 (Comparative Example)

A cathode was prepared in the same manner as in Example 11 except that instead of the platinum-supported catalyst, fine particles of platinum having a particle size of 4 nm (manufactured by N·E Chemcat Co.) were used, and a membrane/electrode assembly was prepared in the same manner as in Example 11 and evaluated in the same manner as in Example 11. The results are shown in Table 2.

### EXAMPLE 20 (Comparative Example)

A platinum-supported catalyst was prepared in the same manner as in Example 11 except that the platinum-supported ratio was changed to 50%, then a cathode was prepared in the same manner as in Example 13, and a membrane/electrode assembly was prepared in the same manner as in Example 11 and evaluated in the same manner as in Example 11. The results are shown in Table 2.

### EXAMPLE 21 (Comparative Example)

A cathode was prepared in the same manner as in Example 15 except that the platinum supported ratio was changed to 82%, and a membrane/electrode assembly was prepared in the same manner as in Example 11 and evaluated in the same manner as in Example 11. The results are shown in Table 2.

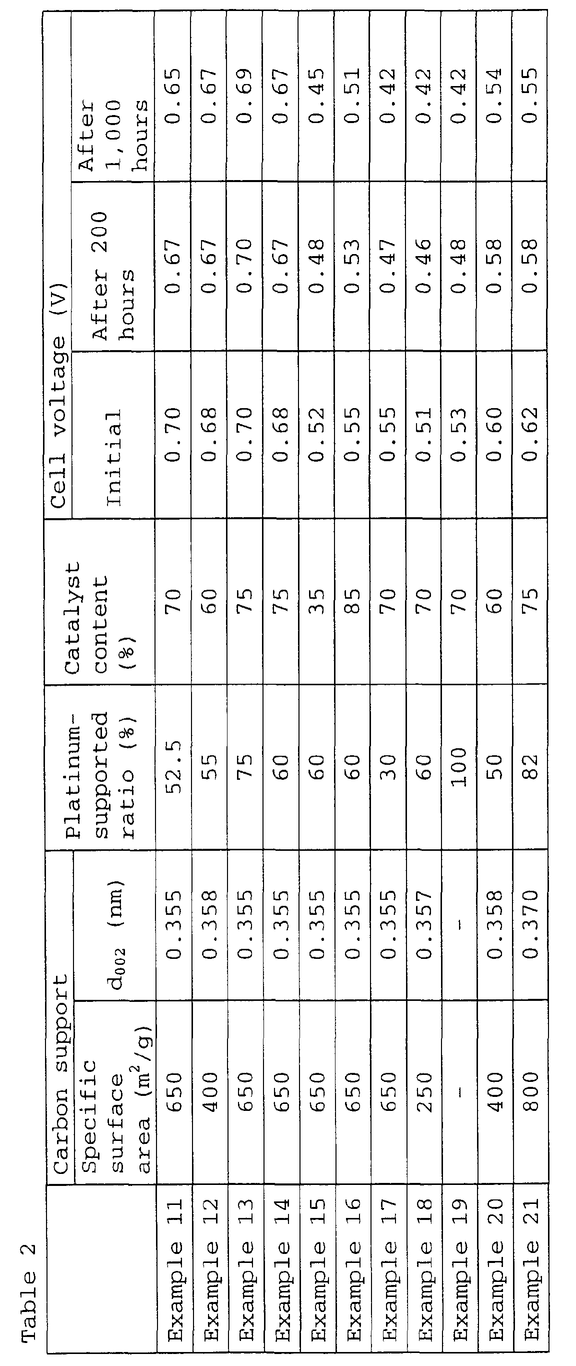

According to the present invention, an electrode catalyst having platinum or a platinum alloy supported on a carbon support having the degree of graphitization controlled, is employed, whereby the carbon support has corrosion resistance, oxidation resistance and water repellency, and the cathode is excellent in the oxygen-reducing activity and has high water repellency and corrosion resistance. Accordingly, a polymer electrolyte fuel cell of the present invention having such a cathode, is excellent in the output characteristics and the driving stability.

Further, in an application where a particularly high output power is required, a polymer electrolyte fuel cell having a high output power can be provided by adjusting the supported ratio of the supported catalyst contained in the cathode and the blend ratio of the supported catalyst and the ion exchange resin in the cathode.

## Claims

1. A polymer electrolyte fuel cell comprising an ion exchange membrane, and a cathode and an anode facing each other via the ion exchange membrane, wherein the cathode comprises an ion exchange resin and an electrode catalyst having platinum or a platinum alloy deposited on a carbon support which has an average lattice spacing of (002) d₀₀₂ calculated by the X-ray diffraction data, of from 0.340 to 0.362 nm, a microcrystallite size L_{c} calculated by the X-ray diffraction data of from 0.6 to 4 nm and a specific surface area of from 260 to 800 m²/g.

2. The polymer electrolyte fuel cell according to Claim 1, wherein the platinum or the platinum alloy is supported in an amount of from 10 to 65% in the total mass of the electrode catalyst.

3. The polymer electrolyte fuel cell according to Claim 1 or 2, wherein each of the ion exchange resin and the ion exchange membrane is made of a perfluorocarbon polymer having sulfonic acid groups.

4. The polymer electrolyte fuel cell according to Claim 1, wherein the ion exchange resin is made of a perfluorocarbon polymer having sulfonic acid groups, the electrode catalyst is contained in an amount of from 50 to 80 mass% based on the total amount of the ion exchange resin and the electrode catalyst, and the electrode catalyst contains the platinum or the platinum alloy in an amount of from 52 to 80 mass% in the total mass of the electrode catalyst.

5. The polymer electrolyte fuel cell according to Claim 3 or 4, wherein the perfluorocarbon polymer has an ion exchange capacity of from 1.0 to 1.5 meq/g dry resin.

6. The polymer electrolyte fuel cell according to Claim 4 or 5, wherein in a region within 10 µm in a thickness direction of the cathode from the surface of the ion exchange membrane, the electrode catalyst is present in an amount of from 50 to 80 mass% of the total amount of the perfluorocarbon polymer and the electrode catalyst.

7. The polymer electrolyte fuel cell according to any one of Claims 1 to 6, wherein the platinum alloy is an alloy of platinum with at least one metal selected from the group consisting of ruthenium, rhodium, palladium, osmium, iridium, gold, silver, chromium, iron, titanium, manganese, cobalt, nickel, molybdenum, tungsten, aluminum, silicon, zinc and tin.

8. A method for producing a polymer electrolyte fuel cell comprising an ion exchange membrane, and a cathode and an anode facing each other via the ion exchange membrane, wherein the cathode comprises an ion exchange resin and an electrode catalyst, wherein the electrode catalyst is obtained by subjecting a carbon black or activated carbon having a specific surface area of at least 300 m²/g to heat treatment at a temperature of from 1,000 to 2,200°C and having platinum or a platinum alloy supported on the obtained carbon material as a support.

9. The method for producing a polymer electrolyte fuel cell according to Claim 8, wherein the carbon material has an average lattice spacing of (002) d₀₀₂ calculated by the X-ray diffraction data, of from 0.340 to 0.362 nm.

10. The method for producing a polymer electrolyte fuel cell according to Claim 8 or 9, wherein the carbon material has a microcrystallite size L_{c} calculated by the X-ray diffraction data of from 0.6 to 4 nm and a specific surface area of from 260 to 800 m²/g.

11. The method for producing a polymer electrolyte fuel cell according to any one of Claims 8 to 10, wherein the ion exchange resin is made of a perfluorocarbon polymer having sulfonic acid groups, the electrode catalyst contains platinum or a platinum alloy in an amount of from 52 to 80 mass% in the total mass of the electrode catalyst, and the cathode is prepared so that the electrode catalyst will be from 50 to 80 mass% based on the total amount of the ion exchange resin and the electrode catalyst.
